# EUROPÄISCHE PATENTANMELDUNG

(11) **EP 4 520 523 A1**
(43) Veröffentlichungstag der Anmeldung: **12.03.2025**
(21) Anmeldenummer: 24188173.9
(22) Anmeldetag: 12.07.2024
(51) Int. Cl.: B32B 9/02, B32B 3/06, B32B 27/10, B32B 29/00, B32B 29/04, B44C 5/04, E04F 13/07, E04F 15/02

(54) **PLATTENFÖRMIGES BAUELEMENT UND EIN VERFAHREN ZU DESSEN HERSTELLUNG**

(30) Priorität: 05.09.2023 DE 102023123888
(71) Anmelder: MeisterWerke Schulte GmbH, 59602 Rüthen-Meiste (DE)
(72) Erfinder: Schulte, Guido, 59602 Rüthen (DE)
(74) Vertreter: Ksoll, Peter

(57) **Zusammenfassung**

Die vorliegende Erfindung betrifft ein plattenförmiges Bauelement (1) aufweisend eine Trägerschicht (2), eine Dekorschicht (3) und eine sichtseitige Deckschicht (4), wobei die Dekorschicht (3) zwischen der Trägerschicht (2) und der Deckschicht (4) angeordnet ist. Die Erfindung zeichnet sich dadurch aus, dass zwischen der Dekorschicht (3) und der Trägerschicht (2) ein Korkgranulat (5) angeordnet ist.

## Beschreibung

Die vorliegende Erfindung betrifft ein plattenförmiges Bauelement gemäß den Merkmalen des Oberbegriffs von Anspruch 1 sowie ein Verfahren zur Herstellung eines plattenförmigen Bauelements gemäß den Merkmalen von Anspruch 20.

Plattenförmige Bauelemente, insbesondere Laminatbodenpaneele, sind im Stand der Technik bekannt. Diese weisen zumeist eine Trägerschicht auf, welche aus einer Holzplatte oder einer Platte aus einem Holzwerkstoff, insbesondere einer HDF- oder MDF-Platte gebildet ist. Auf einer Oberseite der Trägerschicht ist üblicherweise eine Dekorschicht angeordnet, welche beispielsweise ein in Holzoptik bedrucktes Papier umfassen kann. Über der Dekorschicht ist vorzugsweise eine Deckschicht bzw. ein Overlay angeordnet. Diese Schicht dient als Verschleißschutz und ist bevorzugt durchsichtig bzw. transparent ausgebildet, so dass die Dekorschicht weiterhin sichtbar ist. Auf einer Unterseite der Trägerschicht kann eine Gegenzuglage angeordnet sein, welche die inneren mechanischen Spannungen des Schichtverbunds ausgleicht.

Um entsprechende Laminatbodenpaneele herzustellen, wird die zuvor beschriebene Schichtanordnung heiß verpresst.

Aufgrund ihrer harten Schichten besitzen gängige Laminatbodenpaneele nur eine unzureichende Schall- bzw. Trittdämmung, was zu Beeinträchtigungen im Hinblick auf den Geräusch- als auch dem Trittkomfort führt.

Um dieses Problem zu lösen, offenbart die EP 1 911 578 B1 ein Verfahren zur Herstellung eines Fußbodenpaneels, wobei zwischen der Trägerschicht und der Dekorschicht eine expandierende Schicht zur Dämpfung und Trittschalldämmung aufgebracht ist. Bei der expandierenden Schicht handelt es sich bevorzugt um eine Kunstharzschicht, welche mit aufschäumenden Additiven versehen ist. Der Gasanteil des Additivs steigt bei der Einwirkung von Druck und/oder Temperatur an, so dass die Schicht beim Verpressen aufschäumt. Nachteilig ist, dass die Deckschicht aufgrund der expandierenden Schicht eine geringe Festigkeit aufweist, so dass etwaige mit dem Fußbodenpaneel zu verbindende Klicksysteme nicht halten oder die Deckschicht selbst porös wird mit der Folge, dass Feuchtigkeit in das Paneel eindringen kann.

Alternativ ist es im Stand der Technik bekannt, dämpfende Zwischenschichten aus Kunstschäumen oder Verbundschäumen zwischen der Dekorschicht und der Trägerschicht anzuordnen. Diese Schäume werden zumeist als Bahnenware in die Schichtanordnung eingebracht. Dies hat den Nachteil, dass die einzelnen Schichten miteinander verklebt werden müssen. Bei Klebeverbindungen über Wärme müssen die dämpfenden, elastischen Schichten zumeist erst mit der Reaktionswärme durchdrungen werden, eher die Klebstoffe unter der Schicht mit der Trägerschicht reagieren können. Dies führt zu sehr langen Presszeiten und hohen, zumeist ungünstigen Aufheizungen in der Konstruktion.

Ausgehend vom Stand der Technik ist die Aufgabe der vorliegenden Erfindung ein kostengünstig herstellbares plattenförmiges Bauelement sowie dessen Herstellung aufzuzeigen, welches insbesondere erhöhte Dämpfungseigenschaften aufweist.

Die Lösung des gegenständlichen Teils der Aufgabe besteht in einem plattenförmigen Bauelement gemäß Anspruch 1. Der verfahrenstechnische Teil der Aufgabe wird durch das Herstellungsverfahren gemäß Anspruch 20 gelöst.

Vorteilhafte Ausgestaltungen und Weiterbildungen des erfindungsgemäßen plattenförmigen Bauelements und dessen Herstellung sind Gegenstand der abhängigen Ansprüche.

Das plattenförmige Bauelement, bei dem es sich bevorzugt um ein Fußbodenpaneel und besonders bevorzugt um ein Laminatbodenpaneel handelt, weist eine Trägerschicht, eine Dekorschicht und eine sichtseitige Deckschicht auf.

Die Trägerschicht ist insbesondere durch eine Holzplatte ausgebildet, alternativ sind auch Platten aus einem Holzwerkstoff, wie HDF- oder MDF-Platten möglich. Die Trägerschicht verleiht dem plattenförmigen Bauelement Stabilität und weist vorzugsweise eine Dicke zwischen 3,0 mm und 12,0 mm auf. Insbesondere liegt die Dicke der Trägerschicht im Bereich zwischen 5,0 mm und 9,0 mm.

Die Dekorschicht ist erfindungsgemäß zwischen der Trägerschicht und der Deckschicht angeordnet und ist bevorzugt aus einem Dekorpapier gebildet. Die Dekorschicht weist insbesondere eine aufgedruckte und von außen sichtbare Farbschicht auf, so dass dem plattenförmigen Bauelement beispielsweise eine Holzoptik verliehen werden kann.

Die Dekorschicht ist vorzugsweise mit Imprägnierharzen aus der Gruppe der Acrylate oder der Polyurethane imprägniert. Diese erzeugen gegenüber Imprägnaten aus Melaminharzen elastischere Dekorschichten was höhere Stoßbelastungen des Bauelements ermöglicht

Die sichtseitig über der Dekorschicht angeordnete Deckschicht ist bevorzugt ein Overlay. Das Overlay ist eine Verschleißschicht, die für erhöhte Abriebeigenschaften und Kratzbeständigkeit Korundpartikel enthalten kann. Die Deckschicht bzw. das Overlay ist vorzugsweise durchsichtig bzw. transparent ausgebildet, so dass das darunterliegende Dekor durch die Deckschicht hindurch sichtbar ist. Bevorzugt wird diese aus Melaminharz hergestellt. Dazu wird ein Overlaypapier in einem Harzbad imprägniert und dabei mit dem Korund verbunden. Alternativ können auch Harze aus Polyurethan/Melaminharz oder Acrylate bzw. Abmischungen davon eingesetzt werden. Alternativ kann die Deckschicht auch eine verschleißfeste Lackierung sein.

Das plattenförmige Bauelement zeichnet sich erfindungsgemäß dadurch aus, dass zwischen der Dekorschicht und der Trägerschicht ein Korkgranulat angeordnet ist. Das Korkgranulat weist aufgrund seiner Zellstruktur eine hohe Elastizität auf und bildet somit eine Dämpfungsschicht. Kork ist zudem hitze- und druckbeständig, so dass die Materialeigenschaften während des Herstellungsverfahrens des plattenförmigen Bauelements nicht beeinflusst werden. Zudem weist Kork eine gute Haftung zu Bindemitteln auf. Wird das plattenförmige Bauelement belastet, wird das zwischen der Dekorschicht und der Trägerschicht angeordnete Korkgranulat gestaucht und federt in seine Ausgangsposition zurück, sobald das plattenförmige Bauelement nicht mehr belastet wird.

Bei der Verwendung des plattenförmigen Bauelements als Fußbodenpaneel, ergeben sich durch das Korkgranulat zwei wesentliche Vorteile. Zum einen dämpft das Korkgranulat den Trittschall beim Begehen des plattenförmigen Bauelements deutlich ab. Die auf das plattenförmige Bauelement wirkende Aufprallenergie wird in Kompressionsarbeit umgewandelt, so dass die imitierten Schallwellen verringert werden. Zum anderen ergibt sich für eine das plattenförmige Bauelement begehende Person durch das dämpfende und federnde Korkgranulat ein deutlich angenehmeres Gehgefühl.

Das Korkgranulat hat den zusätzlichen Vorteil, dass das Korkgranulat selbst, aber auch die Herstellung eines Korkgranulats enthaltenden plattenförmigen Bauelements kostengünstig ist. Weiterhin ist der energetische Aufwand geringer im Vergleich zur Bahnenware, welche separat hergestellt und anschließend in die Schichtanordnung eingebracht werden muss. Zudem erfüllt Kork die Grundsätze der Nachhaltigkeit. Kork ist ökologisch, insbesondere, weil hierfür keine Korkeiche gefällt werden muss. Weiterhin weist Kork ein hohes Recyclingpotential auf. Bei Kork handelt es sich zudem um einen nachwachsenden und wiederverwertbaren Rohstoff. Das plattenförmige Bauelement kann somit ohne Plastik und auf Basis von nachwachsenden Rohstoffen wie Holz und Papier hergestellt werden.

Das Korkgranulat kann in Verbindung mit einem Trockenpulver als Bindemittel bei der Herstellung des plattenförmigen Bauelements direkt auf die Trägerschicht gestreut werden. Vorteilhaft sind Gemische mit 5-20 Vol.% Faseranteil, vorzugsweise mit Naturfasern aus Hanf, Jute, Flachs oder Baumwolle mit einer Faserlänge kleiner-gleich 4 mm. Anschließend kann die Dekorschicht auf die Korkgranulate aufgelegt und der Schichtaufbau zum plattenförmigen Bauelement mit Temperaturen größer 150° verpresst werden. Dieser Prozess kann durch den Einsatz von Additiven und Fixierungen durch Befeuchtung und Wärmezufuhr vor der Aufbringung der Dekorschicht optimiert werden. Es sind auch alternative Rezepturen denkbar, bei denen das Korkgranulat zunächst mit einem hitzeaktivierbaren Bindemittel in einem Mischer umhüllt wird, bei Temperaturen kleiner 90°C vorgetrocknet wird, so dass ein rieselfähiges Gemisch entsteht und dieses Kork-Bindemittelgemisch dann auf die Trägerschicht gestreut und anschließend zum plattenförmigen Bauelement verpresst wird. Die Presszeiten sind abhängig von den Temperaturen und Schichtdicken, vorteilhaft sind Temperaturen größer 150°C und Presszeiten kleiner 2 Minuten.

Die Dekorschichten von plattenförmigen Bauelementen sind bevorzugt imprägniert. Die Imprägnierung kann oberseitig, unterseitig oder allseitig erfolgen. Erfindungsgemäß ist die Dekorschicht auf ihrer der Trägerschicht zugewandten Unterseite imprägniert, mithin weist die Dekorschicht eine unterseitige Imprägnierschicht auf. Diese Technologie kann dazu genutzt werden, das Korkgranulat mit der Unterseite der Dekorschicht zu verbinden. Das Korkgranulat ist also bevorzugt mit der Imprägnierschicht verbunden. Die Verbindung zwischen Korkgranulat und Imprägnierschicht erfolgt dabei vorzugsweise direkt nach der Imprägnierung der Dekorschicht, in dem das Korkgranulat auf die noch feuchte Imprägnierschicht aufgegeben wird. Durch die anschließende Trocknung der Imprägnierschicht wird das Korkgranulat fest mit der Imprägnierschicht verbunden. Diese Ausführungsvariante hat den Vorteil, dass das Korkgranulat bereits vor einem Verpressen der einzelnen Schichten zu einem plattenförmigen Bauelement mit der Dekorschicht verbunden ist. So kann sichergestellt werden, dass das Korkgranulat gleichmäßig auf der Dekorschicht und somit gleichmäßig zwischen der Trägerschicht und der Dekorschicht verteilt angeordnet ist. Ein mögliches Verrutschen des Korkgranulats kurz vor dem Pressvorgang, was die Ausbildung einer ungleichmäßigen Dämpfungsschicht nach sich ziehen würde, wird vermieden.

Alternativ oder ergänzend ist zwischen der Trägerschicht und der Dekorschicht eine Zwischenschicht angeordnet. Die Zwischenschicht ist auf ihrer der Trägerschicht zugewandten Unterseite imprägniert und weist somit eine unterseitige Imprägnierschicht auf. Das Korkgranulat ist mit der Imprägnierschicht verbunden. Im Vergleich zur vorherigen Ausführungsvariante hat diese Anordnung den zusätzlichen Vorteil, dass das Korkgranulat nicht über die Imprägnierschicht mit der Dekorschicht verbunden sein muss. Die zusätzliche Zwischenschicht schafft so weitere Freiheitsgrade bezüglich der Auslegung des plattenförmigen Bauelements. Entscheidend ist auch hier, dass das Korkgranulat bereits vor dem Pressvorgang mit der Zwischenschicht verbunden ist, so dass eine gleichmäßige Verteilung des Korkgranulats im verpressten plattenförmigen Bauelement gewährleistet ist.

Die Zwischenschicht ist bevorzugt aus einem Papierträger gebildet. Dieser weist vorzugsweise ein Flächengewicht von 25 g/m² bis 85 g/m². Durch die Verwendung eines entsprechend dünnen Papierträgers, ist das plattenförmige Bauelement kostengünstig herstellbar.

Die Dekorschicht und/oder die Zwischenschicht können allseitig imprägniert sein. So wird ermöglicht, dass das Korkgranulat auch auf einer Oberseite der Dekorschicht und/oder auf einer Oberseite der Zwischenschicht mit der jeweiligen Imprägnierschicht verbunden sein kann.

In einer weiteren vorteilhaften Ausführungsvariante der Erfindung können mehrere Zwischenschichten, welche ober- und/oder unterseitig über die Imprägnierschicht mit Korkgranulat verbunden sind, übereinander angeordnet werden. Auch eine Kombination aus einer mittels der Imprägnierschicht mit Korkgranulat verbundenen Dekorschicht mit einer mittels der Imprägnierschicht mit Korkgranulat verbundenen Zwischenschicht ist möglich. Über eine entsprechende Kombination aus mehreren Schichten kann die Stärke der durch das Korkgranulat ausgebildeten Dämpfungsschicht reguliert werden.

Insbesondere bei mehreren entsprechenden Korkgranulatschichten kann das plattenförmige Bauelement zwischen dem Korkgranulat und der Deckschicht eine Stabilisierungsschicht aufweisen. Die Stabilisierungsschicht ist bevorzugt aus einem Gittergewebe oder einem Kraftpapier gebildet. Insbesondere, wenn die Bruchspannung der Deckschicht bei Belastung des Gesamtaufbaus durch eine hohe Verformung überschritten wird, kann eine entsprechende Stabilisierungsschicht die Verformung der Deckschicht reduzieren und einen Burch verhindern.

Das Korkgranulat ist ein Gemisch aus Granulatkörnern, wobei die Granulatkörner eine Korngröße von 0,2 mm bis 1 mm, bevorzugt von 0,3 mm bis 0,8 mm, besonders bevorzugt von 0,2 mm bis 0,6 mm, aufweisen. Im Rahmen der Erfindung hat sich herausgestellt, dass entsprechende Korngrößen für das plattenförmige Bauelement eine optimale Kombination zwischen Elastizität und Stabilität bieten. Zudem sorgt eine weniger gestufte Kornverteilung mit Körnungen größer als 1 mm für eine unruhige Oberfläche des plattenförmigen Bauelements.

Das Korkgranulat ist bevorzugt gleichmäßig verteilt mit der Imprägnierschicht verbunden. So ist sichergestellt, dass bei einer Belastung des plattenförmigen Bauelements eine gleichmäßige Dämpfung stattfindet.

Insbesondere sind 100-600 g/m² Korkgranulat mit der Imprägnierschicht verbunden, bevorzugt 200-550 g/m², besonders bevorzugt 300-500 g/m². Diese Verteilungsgrößen haben sich im Rahmen der Erfindung als vorteilhaft für die Dämpfungswirkung und die Stabilität des plattenförmigen Bauelements herausgestellt. Pro Seite und Lage sollte die Korkmenge idealerweise mehr als 200 g/m² betragen.

Die eingesetzten Korkgranulate können auch aus Korkrecyclingprodukten stammen. Somit sind verschiedene Ausgangskorkdichten oder auch unterschiedliche Einfärbungen möglich.

Die Imprägnierschicht ist insbesondere aus einem Imprägnierharz, besonders bevorzugt aus wasserlöslichen aminoplastischen Harzen wie Melaminharze oder Harnstoff, ausgebildet. Auch Imprägnierharze aus der Gruppe der Acrylate oder der Polyurethane sind möglich. Vorteilhaft sind zudem wässrige Mischungen zwischen Melamin- und Dispersionsharzen. Auch Bindemittel auf Isocynatbasis sind geeignet. Möglich ist auch die neue Rezeptur "Acrodur" der BASF.

Unterseitig der Trägerschicht des erfindungsgemäßen plattenförmigen Bauelements kann eine Gegenzuglage vorgesehen sein. Diese dient der Formstabilität und der Feuchtigkeitsabsperrung. Vorzugsweise weist die Gegenzuglage eine Dicke von 0,1 mm bis 3,0 mm auf, insbesondere von 0,6 mm bis 2,5 mm. Die Gegenzuglage besteht beispielsweise aus einem Werkstoff mit einer Dichte von größer oder gleich (≥) 250 kg/m3. Als Gegenzug können auch Folien oder Papiere Anwendung finden.

Bevorzugt weist das plattenförmige Bauelement profilierte und mit Klickverbindungsmitteln versehene Seitenränder auf. So können mehrere plattenförmige Bauelemente miteinander gekoppelt werden. Insbesondere ist so die Ausbildung eines zusammenhängenden Fußbodens möglich.

Das erfindungsgemäße Verfahren zur Herstellung eines plattenförmigen Bauelements umfasst die nachfolgenden Verfahrensschritte.

Zunächst wird ein Papierträger bereitgestellt. Bei dem Papierträger kann es sich um ein Dekorpapier für die Dekorschicht oder um ein Trägerpapier für die Zwischenschicht handeln.

Der Papierträger wird imprägniert. Die Imprägnierung kann gemäß dem Stand der Technik oberseitig, unterseitig oder allseitig erfolgen. Folglich wird eine Imprägnierschicht auf der Ober- und/oder Unterseite ausgebildet.

Neu ist, dass während die Imprägnierschicht noch feucht ist, ein Korkgranulat auf der Imprägnierschicht aufgebracht wird. Da die Imprägnierschicht noch nicht verfestigt ist, wird das Korkgranulat teilweise von der Imprägnierschicht umschlossen.

Anschließend wird die Imprägnierschicht getrocknet, so dass das Korkgranulat fest mit der Imprägnierschicht verbunden ist.

Als Zwischenprodukt bzw. Halbfabrikat erhält man somit einen Papierträger, welcher ober- und/oder unterseitig eine Imprägnierschicht aufweist, mit welcher Korkgranulat fest verbunden ist. Das Korkgranulat kann dabei gleichmäßig auf der Ober- und/oder Unterseite verteilt werden, so dass eine gleichmäßige Dämpfungsschicht im zu verpressenden plattenförmigen Bauelement sichergestellt ist. Diese Herstellung ist zudem kostengünstig, da neben dem Aufstreuvorgang keine zusätzlichen Verfahrensschritte erforderlich sind.

Um das plattenförmige Bauelement zu erhalten, wird der mit dem Korkgranulat beaufschlagte Papierträger zwischen einer Trägerschicht und einer Deckschicht angeordnet, wobei bevorzugt auf einer der Deckschicht abgewandten Unterseite der Trägerschicht eine Gegenzuglage angeordnet ist.

Im Anschluss wird der mit dem Korkgranulat beaufschlagte Papierträger mit der Trägerschicht und der Deckschicht sowie der optionalen Gegenzulage zu einem plattenförmigen Bauelement verpresst.

Vorzugsweise wird der Pressvorgang in einer Kurzkontaktpresse mit einer Verweilzeit von 10 bis 45 Sekunden durchgeführt.

Bevorzugt wird der Pressvorgang bei Temperaturen von 180° C bis 220° C durchgeführt.

Um mehrere plattenförmige Bauelemente miteinander koppeln zu können, können die Seitenwände des plattenförmigen Bauelements profiliert werden. Insbesondere können Klickverbindungsmittel an den Seitenwänden angeordnet werden.

Die Erfindung ist nachfolgend anhand von in den Zeichnungen dargestellten Ausführungsbeispielen näher beschrieben. Es zeigen
- Figur 1: einen Querschnitt durch ein plattenförmiges Bauelement in einer ersten Ausführungsvariante;
- Figur 2: einen Querschnitt durch ein plattenförmiges Bauelement in einer zweiten Ausführungsvariante;
- Figur 3: einen Querschnitt durch ein plattenförmiges Bauelement in einer dritten Ausführungsvariante und
- Figur 4: einen Querschnitt durch ein plattenförmiges Bauelement in einer vierten Ausführungsvariante

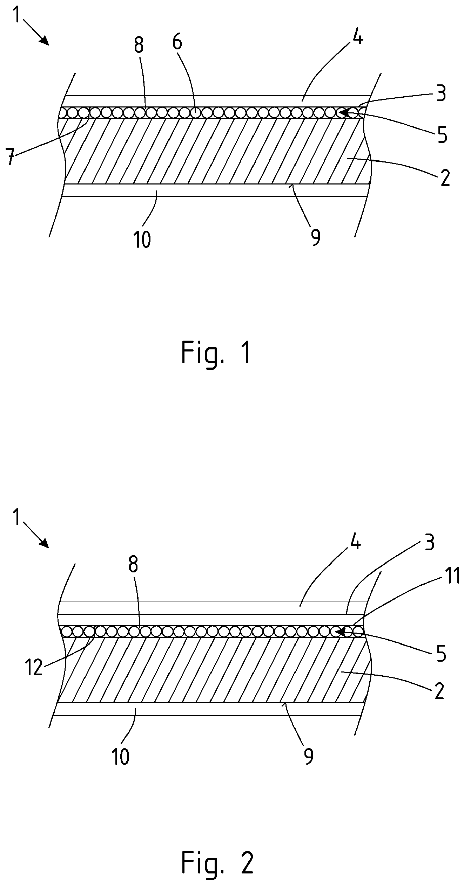

Die Figuren 1 bis 4 sind technisch schematisiert und nicht maßstäblich zu verstehen. In den Figuren werden für gleiche oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

Figur 1 zeigt den Querschnitt einer ersten Ausführungsvariante eines plattenförmigen Bauelements 1. Das plattenförmige Bauelement 1 ist ein Laminatbodenpaneel und weist eine aus einer Trägerplatte gebildete Trägerschicht 2, eine aus einem Dekorpapier gebildete Dekorschicht 3 sowie eine sichtseitige Deckschicht 4 auf. Bei der Deckschicht 4 handelt es sich um ein Overlay aus Melaminharz.

Die Dekorschicht 3 ist zwischen der Trägerschicht 2 und der Deckschicht 4 angeordnet. Erfindungsgemäß ist zwischen der Dekorschicht 3 und der Trägerschicht 2 ein Korkgranulat 5 angeordnet. Das Korkgranulat 5 wird durch eine Vielzahl von Granulatkörnern 6 gebildet. Durch das Korkgranulat 5 weist das plattenförmige Bauelement 1 eine zusätzliche Dämpfungsschicht auf. Sowohl der Tritt- als auch der Geräuschkomfort wird durch diese Dämpfungsschicht bei einem Betreten des plattenförmigen Bauelements 1 erhöht. Zudem ist das Korkgranulat 5 selbst als auch die Herstellung eines plattenförmigen Bauelements 1, welches eine erfindungsgemäße Korkgranulatschicht enthält, kostengünstig.

Die Dekorschicht 3 ist auf ihrer der Trägerschicht 2 zugewandten Unterseite 7 imprägniert und weist eine Imprägnierschicht 8 auf. Das Korkgranulat 5 ist mit der Imprägnierschicht 8 fest verbunden. Das Korkgranulat wird nach dem Imprägniervorgang der Dekorschicht 3 gleichmäßig auf der resultierenden Imprägnierschicht 8 verteilt, während diese noch feucht ist. Das Korkgranulat 5 wird somit teilweise von der Imprägnierschicht 8 eingeschlossen und ist nach der Trocknung der Imprägnierschicht 8 fest mit dieser verbunden. Es besteht somit nicht die Gefahr, dass das Korkgranulat 5 während des zur Herstellung des plattenförmigen Bauelements 1 erforderlichen Pressvorgangs verrutscht und somit ungleichmäßig im plattenförmigen Bauelement 1 verteilt angeordnet ist. Dies hätte eine unregelmäßige Dämpfungsschicht zur Folge, was den Nutzungskomfort des plattenförmigen Bauelements 1 beeinträchtigen würde. Das Korkgranulat 5 kann auch vollständig in der Imprägnierschicht 8 eingeschlossen sein.

Die Trägerschicht 2 weist an ihrer der Dekorschicht 3 abgewandten Unterseite 9 eine Gegenzuglage 10 auf. Durch die Gegenzuglage 10 werden etwaige in der Trägerschicht 2 auftretende Spannungen ausgeglichen.

Das Korkgranulat 5 weist eine Korngröße von 0,2 mm bis 1 mm auf und ist gleichmäßig verteilt mit der Imprägnierschicht 8 verbunden.

Die Schichtdichte des Korkgranulat 5 beträgt 100-600 g/m².

Figur 2 zeigt den Querschnitt einer weiteren Ausführungsvariante des plattenförmigen Bauelements 1. Hier ist zwischen der Trägerschicht 2 und der Dekorschicht 3 eine Zwischenschicht 11 angeordnet. Die Zwischenschicht 11 ist auf ihrer der Trägerschicht 2 zugewandten Unterseite 12 imprägniert und weist somit eine Imprägnierschicht 8 auf. Das Korkgranulat 5 ist mit der Imprägnierschicht 8 verbunden.

Die Zwischenschicht 11 ist aus einem Papierträger gebildet. Der Papierträger weist ein geringes Flächengewicht von 25 g/m² bis 85 g/m² auf und ist somit sehr kostengünstig. In dieser Ausführungsvariante erfolgt die Verbindung zwischen Korkgranulat 5 und der Zwischenschicht 11 analog zur zuvor geschilderten Verbindung zwischen Korkgranulat 5 und Dekorschicht 3. Diese Ausführungsvariante bietet den zusätzlichen Vorteil, dass das Korkgranulat 5 unabhängig von der Dekorschicht 3 in dem plattenförmigen Bauelement 1 integriert werden kann. Auch hier ist insbesondere der Vorteil, dass eine gleichmäßige Verteilung des Korkgranulats 5 bereits vor dem Pressvorgang möglich ist.

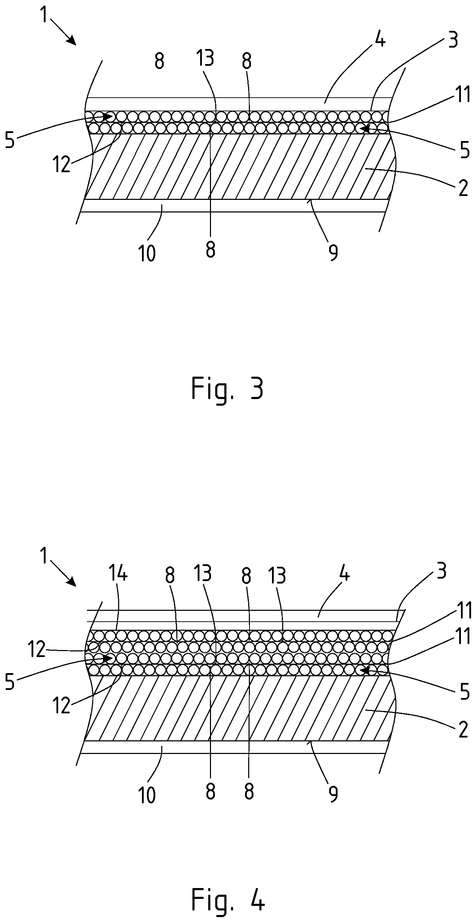

Figur 3 zeigt den Querschnitt einer weiteren Ausführungsvariante des plattenförmigen Bauelements 1. Hier weist die Zwischenschicht 11 auch auf ihrer der Dekorschicht 3 zugewandten Oberseite 13 eine Imprägnierschicht 8 und damit verbundenes Korkgranulat 5 auf. Durch die beidseitige Beschichtung mit Korkgranulat 5 wird die Dämpfungseigenschaft des plattenförmigen Bauelements 1 erhöht. Somit kann die Dämpfungsstärke des plattenförmigen Bauelements 1 je nach Anforderungsbedürfnis angepasst werden.

Figur 4 zeigt den Querschnitt einer weiteren Ausführungsvariante des erfindungsgemäßen plattenförmigen Bauelements 1. Das hier gezeigte plattenförmige Bauelement 1 weist zwischen der Trägerschicht 2 und der Dekorschicht 3 zwei übereinanderliegende Zwischenschichten 11 auf. Beide Zwischenschichten 11 sind an ihrer jeweiligen Oberseite 13 und Unterseite 12 imprägniert und weisen somit sowohl an der jeweiligen Oberseite 13 als auch Unterseite 12 eine Imprägnierschicht 8 auf, wobei Korkgranulat 5 mit jeder der Imprägnierschichten 8 verbunden ist. Durch die Anordnung von zwei Zwischenschichten 11 kann der Dämpfungseffekt des plattenförmigen Bauelements 1 zusätzlich erhöht werden. Dies gilt insbesondere dann, wenn die Zwischenschichten 11 jeweils auf der Oberseite 13 und der Unterseite 12 imprägniert sind und Korkgranulat 5 mit den Imprägnierschichten 8 verbunden ist.

Um die Stabilität des plattenförmigen Bauelements 1 trotz mehrerer Zwischenschichten 11 zu gewährleisten, ist zwischen der obersten, mithin von der Trägerschicht 2 am weitesten entfernten Zwischenschicht 11 und der Dekorschicht 3 eine Stabilisierungsschicht 14 angeordnet. Diese ist aus einem Gittergewebe gebildet und sorgt insbesondere dafür, dass die Bruchspannung der Dekorschicht 3 sowie der Deckschicht 4 bei Belastung des plattenförmigen Bauelements 1 nicht überschritten wird.

Grundsätzlich sind viele verschiedene Kombinationsmöglichkeiten der Zwischenschichten 11 sowie der Dekorschicht 3 möglich. Die in den Ausführungsbeispielen gezeigten Schichtanordnungen sind nicht abschließend zu verstehen. So können beispielsweise auch zwei Zwischenschichten 11 mit einer Dekorschicht 3 kombiniert werden, wobei alle drei Schichten erfindungsgemäß mit Korkgranulat 5 verbunden sind.

### Bezugszeichen:

- 1 -: plattenförmiges Bauelement
- 2 -: Trägerschicht
- 3 -: Dekorschicht
- 4 -: Deckschicht
- 5 -: Korkgranulat
- 6 -: Granulatkörner
- 7 -: Unterseite von 3
- 8 -: Imprägnierschicht
- 9 -: Unterseite von 2
- 10-: Gegenzuglage
- 11 -: Zwischenschicht
- 12 -: Unterseite von 11
- 13 -: Oberseite von 11
- 14 -: Stabilisierungsschicht

## Patentansprüche

1. Plattenförmiges Bauelement (1) aufweisend eine Trägerschicht (2), eine Dekorschicht (3) und eine sichtseitige Deckschicht (4), wobei die Dekorschicht (3) zwischen der Trägerschicht (2) und der Deckschicht (4) angeordnet ist, wobei zwischen der Dekorschicht (3) und der Trägerschicht (2) ein Korkgranulat (5) angeordnet ist, **dadurch gekechnnzeichnet**, dass die Dekorschicht (3) auf ihrer der Trägerschicht (2) zugewandten Unterseite (7) imprägniert ist und eine Imprägnierschicht (8) aufweist, wobei das Korkgranulat (5) mit der Imprägnierschicht (8) verbunden ist.

2. Plattenförmiges Bauelement (1) aufweisend eine Trägerschicht (2), eine Dekorschicht (3) und eine sichtseitige Deckschicht (4), wobei die Dekorschicht (3) zwischen der Trägerschicht (2) und der Deckschicht (4) angeordnet ist, wobei zwischen der Dekorschicht (3) und der Trägerschicht (2) ein Korkgranulat (5) angeordnet ist, **dadurch gekennzeichnet, dass** zwischen der Trägerschicht (2) und der Dekorschicht (3) eine Zwischenschicht (11) angeordnet ist und die Zwischenschicht (11) auf ihrer der Trägerschicht (2) zugewandten Unterseite (12) imprägniert ist und eine Imprägnierschicht (8) aufweist, wobei das Korkgranulat (5) mit der Imprägnierschicht (8) verbunden ist.

3. Plattenförmiges Bauelement (1) nach Anspruch 1 oder 2, **dadurch gekenn zeichnet**, dass das plattenförmige Bauelement (1) ein Fußbodenpaneel, insbesondere ein Laminatbodenpaneel ist.

4. Plattenförmiges Bauelement (1) nach einem der Ansprüche 1 bis 3, **dadurch gekennzeichnet, dass** die Dekorschicht (3) aus einem Dekorpapier gebildet ist.

5. Plattenförmiges Bauelement (1) nach einem der Ansprüche 2 bis 4, **dadurch gekennzeichnet, dass** die Zwischenschicht (11) aus einem Papierträger gebildet ist.

6. Plattenförmiges Bauelement (1) nach Anspruch 5, **dadurch gekennzeichnet, dass** der Papierträger ein Flächengewicht von 25 - 85 g/m² aufweist.

7. Plattenförmiges Bauelement (1) nach einem der Ansprüche 1 bis 6, **dadurch gekennzeichnet, dass** die Dekorschicht (3) allseitig imprägniert ist.

8. Plattenförmiges Bauelement (1) nach einem der Ansprüche 1 bis 7, **dadurch geennzeichenet**, dass die Deckschicht (4) ein Overlay aus Melaminharz oder mit Imprägnierharzen aus der Gruppe der Acrylate oder der Polyurethane imprägniert ist.

9. Plattenförmiges Bauelement (1) nach einem der Ansprüche 1 bis 9, **dadurch gekennzeichnet, dass** die Deckschicht (4) eine verschleißfeste Lackierung ist.

10. Plattenförmiges Bauelement (1) nach einem der Ansprüche 1 bis 9, **dadurch g ekennzeichnet**, dass das Korkgranulat (5) eine Korngröße von 0,2 bis 1 mm aufweist, bevorzugt von 0,3 bis 0,8 mm, besonders bevorzugt von 0,2 bis 0,6 mm.

11. Plattenförmiges Bauelement (1) nach einem der Ansprüche 1 bis 10, **dadurch gekennzeichnet, dass** das Korkgranulat (5) gleichmäßig verteilt mit der Imprägnierschicht (8) verbunden ist.

12. Plattenförmiges Bauelement (1) nach einem der Ansprüche 1 bis 11, **dadurch gekennzeichnet, dass** 100-600 g/m² Korkgranulat (5) mit der Imprägnierschicht (8) verbunden sind, bevorzugt 200-550 g/m², besonders bevorzugt 300-500 g/m².

13. Plattenförmiges Bauelement (1) nach einem der Ansprüche 1 bis 12, **dadurch gekennzeichnet, dass** das Korkgranulat (5) auf einer Oberseite der Dekorschicht (3) und/oder auf einer Oberseite (13) der Zwischenschicht (11) mit der jeweiligen Imprägnierschicht (8) verbunden ist.

14. Plattenförmiges Bauelement (1) nach einem der Ansprüche 1 bis 13, **dadurch gekennzeichnet, dass** zwischen dem Korkgranulat (5) und der Deckschicht (4) eine Stabilisierungsschicht (14) angeordnet ist.

15. Plattenförmiges Bauelement (1) nach Anspruch 14, **dadurch gekennzeichnet, dass** die Stabilisierungsschicht (14) aus einem Gittergewebe oder einem Kraftpapier gebildet ist.

16. Plattenförmiges Bauelement (1) nach einem der Ansprüche 1 bis 15, **dadurch gekennzeichnet, dass** die Imprägnierschicht (8) aus einem Imprägnierharz, insbesondere aus Melaminharz oder aus der Gruppe der Acrylate oder der Polyurethane, ausgebildet ist.

17. Plattenförmiges Bauelement (1) nach einem der Ansprüche 1 bis 16, **dadurch gekennzeichnet, dass** die Trägerschicht (2) an ihrer der Dekorschicht (3) abgewandten Unterseite (9) eine Gegenzuglage (10) aufweist.

18. Plattenförmiges Bauelement (1) nach einem der Ansprüche 1 bis 17, **dadurch gekennzeichnet, dass** das plattenförmige Bauelement (1) profilierte Seitenränder, insbesondere Klickverbindungsmittel, aufweist.

19. Verfahren zur Herstellung eines plattenförmigen Bauelements (1) umfassend die folgenden Verfahrensschritte:
• Bereitstellen eines Papierträgers,
• Imprägnierung zumindest einer Seite des Papierträgers unter Ausbildung einer Imprägnierschicht (8),
• Aufbringen von Korkgranulat (5) auf der Imprägnierschicht (8),
• Trocknung der Imprägnierschicht (8), so dass das Korkgranulat (5) in einem getrockneten Zustand mit der Imprägnierschicht (8) verbunden ist,
• Anordnung des Papierträgers zwischen einer Trägerschicht (2) und einer Deckschicht (4), wobei bevorzugt auf einer der Dekorschicht (3) abgewandten Unterseite (9) der Trägerschicht (2) eine Gegenzuglage (10) angeordnet ist,
• Verpressen des Papierträgers mit der Trägerschicht (2) und der Deckschicht (4) um das plattenförmige Bauelement (1) zu erhalten.

20. Verfahren nach Anspruch 19, **dadurch gekennzeichnet, dass** der Pressvorgang in einer Kurzkontaktpresse mit einer Verweilzeit von 10 bis 45 Sekunden durchgeführt wird.

21. Verfahren nach Anspruch 19 oder 20, **dadurch gekennzeichnet, dass** der Pressvorgang bei Temperaturen von 180°C bis 220°C durchgeführt wird.

22. Verfahren nach einem der Ansprüche 19 bis 21, **dadurch gekennzeichnet, dass** die Seitenwände des plattenförmigen Bauelements (1) profiliert werden, insbesondere Klickverbindungsmittel an den Seitenwänden angeordnet werden.
